Europäisches Patentamt

European Patent Office

Office européen des brevets

(19)

(11) Publication number: **0 168 873**
A1

# (12) EUROPEAN PATENT APPLICATION

(21) Application number: 85201017.2

(22) Date of filing: 27.06.85

(51) Int. Cl.⁴: **B 65 G 47/51**

(30) Priority: 19.07.84 NL 8402282

(43) Date of publication of application: 22.01.86
Bulletin 86/4

(84) Designated Contracting States: AT BE CH DE FR GB IT
LI LU NL SE

(71) Applicant: Rolco International B.V., Simon de
Cockstraat 4 Postbus 5074, NL-5004 EB Tilburg (NL)

(72) Inventor: Boelen, Adrianus Johannes Maria, Ringbaan
Oost 265, NL-5012 GE Tilburg (NL)

(74) Representative: Lips, Hendrik Jan George, Ir.,
HAAGSCH OCTROOIBUREAU Breitnerlaan 146,
NL-2596 HG Den Haag (NL)

(54) Conveyor device.

(57) Conveyor device provided with parallel and spaced
endless conveyor chains (1) guided around a number of
spaced sprockets (2, 3) and also being guided around
sprockets (5, 6) mounted in slides (4) being movable to and
fro between the spaced sprockets (2, 3) dependent on the
way in which the conveyor chains (1) are driven, and with a
pair of fixedly mounted guiding chains or cables (9, 10) for
guiding the slides and extending substantially parallel to
the parts of the conveyor chains (1), each being guided
around a pair of guiding wheels (11, 12 and 13, 14 resp.)
supported by the slide near a side of this.

**0 168 873**

Conveyor device.

The invention relates to a conveyor device provided with parallel and spaced endless chains guided around a number of spaced sprockets and also being guided around sprockets mounted in slides being movable to and fro between the spaced sprockets dependent on the way in which the chains are driven.

Such conveyor devices are e.g. used for conveying articles by means of article carriers mounted to the chains. The device can also serve as accumulator because if at the discharge side no articles are taken away a great number of the article carriers, supported by the chains, can be loaded with articles and kept in store till the articles can be discharged. Said discharge then can take place without charging the carriers with articles. This is possible because the lenghts of the chain parts between the sprockets can be varied either at the infeed or the discharge side by moving the slides.

In case of such conveyor devices a problem is that the slide tends to come into an oblique position in consequence of the moments which are exerted to the slide in the device. Possibly this might be counteracted by fixed guiding rails or such like mounted near the sides of the slides but this should require a heavy construction.

The invention aims to obtain a conveyor device of the above mentioned kind in which in a simple way it is avoided that a slide is coming into an oblique position.

According to the invention this is obtained because for guiding the slide a pair of fixedly mounted guiding chains or cables are provided which are extending substantially parallel to the parts of the conveyor chains, each of said guiding chains or cables being guided around a pair of guiding wheels supported by the slide, one of these being provided near each side of the slide so that a part of a guiding chain or cable positioned near a side of the slide is extending from the slide in a direction opposite to the part of the relating guiding chain or cable extending from the slide at the other side of this, the parts of both guiding chains or cables extending from the same side of the slide running in opposite directions from the slide.

The invention is further described by means of the drawing, in which:

Fig. 1 schematically shows a conveyor device, the various parts of which are shown in a first position;

Fig. 2 shows the conveyor device from Fig. 1 with various parts of the device in another position;

Fig. 3 shows a similar conveyor device in which, however, the chain parts are extending horizontally instead of vertically;

Fig. 4 shows the conveyor device of Fig. 3 with the various parts in another position than as shown in Fig. 3; and

Fig. 5 schematically shows the position of the guiding chains or cables for a slide.

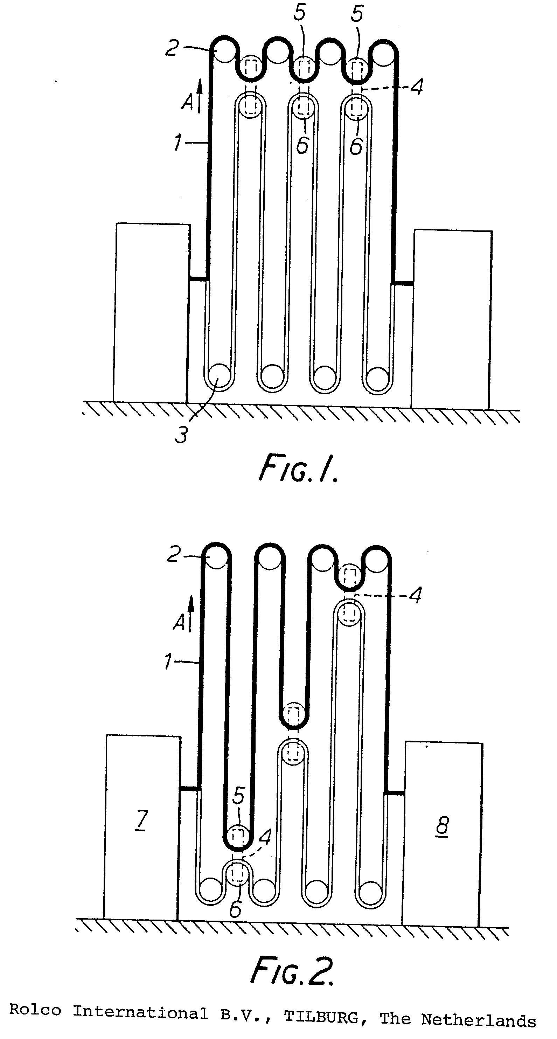

The conveyor device schematically shown in Fig. 1 and 2 comprises a pair conveyor chains 1 which in the Figures are positioned behind each other and which near the upper side of the device are guided around a number of sprockets 2 and near the lower side of the device around sprockets 3, said sprockets 2 and 3 being rotatably supported by fixedly mounted horizontal shafts. As seen in plan between each two sprockets 2 and 3 respectively a so-called slide 4 is provided supporting a pair of sprockets 5 and 6 being rotatably supported by horizontal shafts. With this a part of a chain 1 positioned between two succeeding sprockets 2 is guided below the upper sprocket 5 of a slide 4 positioned between these sprockets 2, that part of the chain extending between the sprockets 3 positioned near the lower side of the device and straight below the

**0 168 873**

sprockets 2 being guided around the lowest sprocket 6 of the related slide 4.

Between both spaced conveyor chains 1 not shown article carriers are provided which are moved in the direction according to arrow A by means of the chains.

The articles are fed to the article carriers in an infeed station 7 and are removed from the carriers in a discharge station 8. The loaded article carriers are supported by the part of the conveyor chains being indicated with thick lines, the empty article carriers being supported by the part of the conveyor chains being indicated by two spaced thin lines.

If the discharge of articles at the discharge station 8 has to be discontinued the conveyor chain is held there but the supply of products in infeed station 7 can be continued because in such a case the article receiving portion of the conveyor chains is elongated by moving downwards succeeding slides which is attended with a shortening of the portions of the conveyor chains 1 supporting the article carriers on which no articles are present as will be clear from Fig. 2.

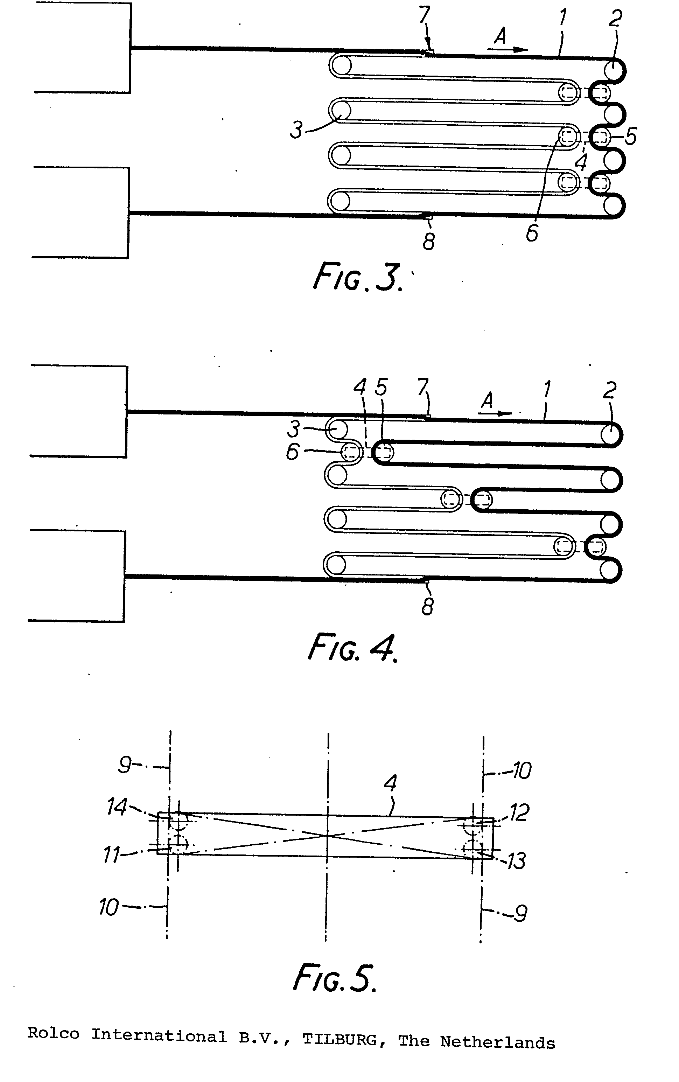

As shown in Figs. 3 and 4 the device can be executed also in that way that the parts of the conveying chains are extending horizontally instead of vertically. In the Fig. 3 and 4 the parts corresponding with the parts shown in the Figs. 1 and 2 are indicated with the same reference numbers as in Figs. 1 and 2.

In practice it has appeared that now the slides 4 tend to come into an oblique position in a plane parallel to the parts of the conveyor chains and perpendicular to the plane of the drawing. To counteract this according to the invention use is made of a pair of guiding chains or cables 9 and 10.

As seen in Fig. 5 the upper end of the cable 9 is fixed at the heigth of the sprockets 2 and at the heigth of the left side of the slide 4 and the part of the cable 9 extending from this upper fixed point downwardly is guided around the lower part of a guiding wheel 11 supported by the slide 4 in the direction of the right side of the slide 4 as seen in Fig. 5. There the cable 9 is guided around a guiding wheel 12 supported by the slide and is extending further downwardly substantially parallel to the conveyor chains. The lower end of the chain 9 is fixed at the height of the sprockets 3.

The upper end of the other guiding chain or cable 10 also is fixed at the height of the sprockets 2 and is running downwardly substantially parallel to the conveyor chains, as seen in Fig. 5, in the direction of the slide 4 and at the right side of this slide 4. There the part of the cable 10 coming from above is guided around the lower side of a guiding wheel 13 supported by the slide 4 and is running to the left side of the slide 4. Near the left side of the slide 4 the cable 10 is guided over a guiding wheel 14 supported by the slide 4 to extend from this guiding wheel 14 downwardly. The lower end of the cable 10 again is fixed at the height of the sprockets 3.

By using these guiding chains or cables a rotating moment exerted on the slide and being clockwise or counterclockwise as seen in Fig. 5 will be opposed by a counterdirected moment exerted in the one or the other guiding chain or cable.

Although principally only one guiding chain or cable should be needed the advantage of using two chains or cables is that moments caused by mass inertia are better absorbed and the device is made independent of the driving direction.

## C L A I M

1. Conveyor device provided with parallel and spaced endless conveyor chains (1) guided around a number of spaced sprockets (2,3) and also being guided around sprockets (5,6) mounted in slides (4) being movable to and fro between the spaced sprockets (2,3) dependent on the way in which the conveyor chains (1) are driven,
characterized in
that for guiding a slide (4) a pair of fixedly mounted guiding chains or cables (9,10) are provided which are extending substantially parallel to the parts of the conveyor chains (1), each of said guiding chains or cables (9,10) being guided around a pair of guiding wheels (11,12 and 13,14 resp.) supported by the slide (4), one of these (11,12 and 13,14 resp.) being provided near each side of the slide (4) so that a part of a guiding chain or cable (9,10) positioned near a side of the slide (4) is extending from the slide (4) in a direction opposite to the part of the relating guiding chain or cable (9,10) extending from the slide (4) at the other side of this, the parts of both guiding chains or cables (9,10) extending from the same side of the slide (4) running in opposite directions from the slide (4).

------

FIG. 1.

FIG. 2.

Rolco International B.V., TILBURG, The Netherlands

0 168 873

FIG. 3.

FIG. 4.

FIG. 5.

Rolco International B.V., TILBURG, The Netherlands

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 142 626 (BRADLEY)<br>* Abstract; figure 1 * | 1 | B 65 G 47/51 |
| Y | DE-A-1 275 446 (ZARGES LICHTMETALLBAU KG)<br>* Figure 1; column 1, lines 17-27 * | 1 | |
| A | FR-A-1 562 551 (BRITISH HOVERCRAFT CORP.) | | |

|  |
|---|
| TECHNICAL FIELDS SEARCHED (Int. Cl.4) |
| B 65 G |

The present search report has been drawn up for all claims

| Place of search | Date of completion of the search | Examiner |
|---|---|---|
| THE HAGUE | 02-08-1985 | MORRIS A.A. |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO Form 1503 03 82